(19) Europäisches Patentamt
European Patent Office
Office européen des brevets

(11) **EP 3 981 739 A1**

(12) # EUROPEAN PATENT APPLICATION
published in accordance with Art. 153(4) EPC

(43) Date of publication:
**13.04.2022 Bulletin 2022/15**

(21) Application number: **20818451.5**

(22) Date of filing: **07.05.2020**

(51) International Patent Classification (IPC):
***C01B 3/38*** $^{(2006.01)}$ ***H01M 8/04313*** $^{(2016.01)}$
***H01M 8/0444*** $^{(2016.01)}$ ***H01M 8/04701*** $^{(2016.01)}$
***H01M 8/04746*** $^{(2016.01)}$ ***H01M 8/04828*** $^{(2016.01)}$
***H01M 8/0612*** $^{(2016.01)}$ ***H01M 8/0662*** $^{(2016.01)}$
***H01M 8/10*** $^{(2016.01)}$ ***B01J 23/46*** $^{(2006.01)}$
***B01J 29/90*** $^{(2006.01)}$

(52) Cooperative Patent Classification (CPC):
**B01J 23/46; B01J 29/90; C01B 3/38; H01M 8/04313; H01M 8/0444; H01M 8/04701; H01M 8/04746; H01M 8/04828; H01M 8/0612; H01M 8/0662; H01M 8/10;** Y02E 60/50; Y02P 20/52; Y02P 20/584

(86) International application number:
**PCT/JP2020/018491**

(87) International publication number:
**WO 2020/246197 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2019 JP 2019104072**

(71) Applicant: **Panasonic Intellectual Property Management Co., Ltd.**
**Osaka-shi, Osaka 540-6207 (JP)**

(72) Inventors:
- **KUSUYAMA, Takahiro**
  **Osaka (JP)**
- **TAKEDA, Kenyu**
  **Osaka (JP)**
- **TAGUCHI, Kiyoshi**
  **Osaka (JP)**

(74) Representative: **Grünecker Patent- und Rechtsanwälte**
**PartG mbB**
**Leopoldstraße 4**
**80802 München (DE)**

(54) **HYDROGEN GENERATOR, FUEL CELL SYSTEM USING SAME, AND OPERATION METHOD THEREOF**

(57) A hydrogen production device (350) includes: a reformer (100) which produces hydrogen-containing gas from a hydrocarbon-based raw material by a reforming reaction; a CO remover (150) which includes an oxidation catalyst, and reduces a carbon monoxide concentration in the hydrogen-containing gas with use of the oxidation catalyst by an oxidation reaction to decompose ammonia contained in the hydrogen-containing gas; a raw material supplier (20); a water supplier (30); an oxidizing gas supplier (40); a heater (10); and a controller (300). The controller (300) determines, based on a parameter related to an ammonia concentration in the hydrogen-containing gas supplied to the CO remover (150), an upper limit value of a water vapor partial pressure in the hydrogen-containing gas supplied to the CO remover (150), and changes a set value of the water vapor partial pressure to a value lower than the upper limit value.

FIG. 1

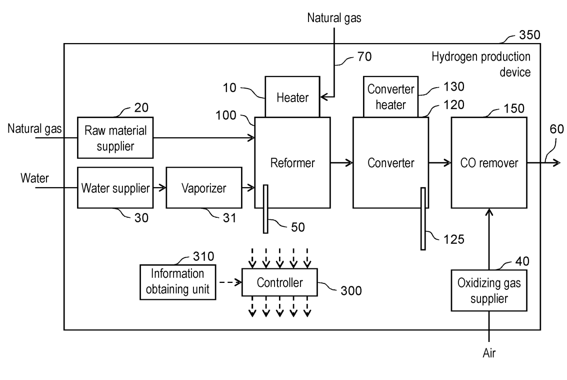


EP 3 981 739 A1

**Description**

TECHNICAL FIELD

The present disclosure relates to a hydrogen production device, a fuel cell system including the hydrogen production device, and a method of operating the hydrogen production device.

BACKGROUND ART

General fuel cells, for example, polymer electrolyte fuel cells (PEFCs), use hydrogen as a fuel at the time of power generation operation. However, the hydrogen supply means required for the power generation operation of the fuel cells has not currently been prepared as a general infrastructure. Accordingly, in order to obtain electric power from a fuel cell system including PEFCs, it is necessary to produce hydrogen as a fuel at the installation place of the fuel cell system.

Accordingly, in a conventional fuel cell system, a hydrogen production device is often provided together with the fuel cells. The hydrogen production device includes, for example, a reformer that produces hydrogen-containing gas by a steam reforming reaction. Hydrogen is produced by the steam reforming reaction. In the steam reforming reaction, a hydrocarbon-based raw material (raw material gas), such as natural gas, propane gas, naphtha, gasoline and kerosene, or an alcohol-based raw material, such as methanol, is used. The raw material is supplied together with water to the reformer that includes a reforming catalyst to cause the steam reforming reaction to proceed, so that hydrogen-containing gas is produced.

The hydrogen-containing gas produced by the steam reforming reaction contains carbon monoxide (CO) produced as a by-product. For example, the hydrogen-containing gas produced by the reformer of the hydrogen production device contains carbon monoxide at a concentration of about 10% to 15%. The carbon monoxide contained in the hydrogen-containing gas may significantly poison the electrode catalysts of the PEFCs. Poisoning of the electrode catalysts significantly reduces the power generation performance of the PEFCs.

Accordingly, the conventional hydrogen production device often includes, in addition to the reformer that produces hydrogen-containing gas, a CO remover that includes an oxidation catalyst in order to sufficiently reduce the carbon monoxide concentration in the hydrogen-containing gas. The CO remover reduces the carbon monoxide concentration in the hydrogen-containing gas produced by the reformer to 100 ppm or less, preferably 10 ppm or less. The hydrogen-containing gas from which carbon monoxide has been sufficiently removed by the CO remover is supplied to the fuel cell of the fuel cell system during the power generation operation of the fuel cell system. As a result, poisoning of the electrode catalyst is reduced in the PEFCs.

In order to carry out the steam reforming reaction stably and efficiently, it is necessary to supply, to the reformer, the amount of water suitable for the composition of the raw material supplied to the reformer. For example, in the steam reforming reaction of the hydrocarbon expressed by (Chem. 1), theoretically, 2 mol of water ($H_2O$) is required for 1 mol of methane ($CH_4$). For 1 mol of ethane ($C_2H_6$), 4 mol of water ($H_2O$) is required.

[Chem. 1]

$$C_nH_m + 2nH_2O \rightarrow (2n + \frac{m}{2})H_2 + nCO_2$$

[Chem. 2] $$CO_2 + H_2 \rightarrow CO + H_2O$$

On the other hand, along with the steam reforming reaction, the reverse shift reaction expressed by (Chem. 2) also proceeds. By the reverse shift reaction, carbon monoxide and water are produced from the hydrogen and carbon dioxide produced by the steam reforming reaction. The hydrogen produced from the hydrocarbon is consumed by the reaction, and the amount of hydrogen in the hydrogen-containing gas is reduced.

In order to efficiently produce hydrogen-containing gas to be supplied to the fuel cell, it is preferable to increase the amount of water supplied to the reformer compared with the theoretical amount of water supplied, so that the steam reforming reaction expressed by (Chem. 1) is promoted and the reverse shift reaction expressed by (Chem. 2) is reduced. Accordingly, by increasing the amount of water supplied to the reformer compared with the theoretical amount of water supplied, a problem such as carbon deposition in the reforming catalyst can be reduced. Hence, the fuel cell system is generally set such that about 1.5 times as much water as the theoretical amount of water supplied calculated from the

amount of raw material supplied is supplied to the reformer.

Natural gas, which is the main raw material used in the reformer of the hydrogen production device, usually contains nitrogen which is a kind of nitrogen compound. Nitrogen content generally varies from region to region where natural gas is supplied. When natural gas which contains nitrogen is supplied to the reformer of the hydrogen production device during the power generation operation of the fuel cell system, the hydrogen produced in the reforming catalyst of the reformer and the nitrogen in the natural gas react with each other, which may produce ammonia.

If ammonia is contained in the hydrogen-containing gas, the catalyst of the fuel cell may be poisoned by ammonia, leading to a reduced power generation performance. In view of the above, in a hydrogen production device that supplies hydrogen-containing gas to a fuel cell, it is necessary to decompose ammonia in the hydrogen-containing gas and reduce the ammonia concentration in the hydrogen-containing gas to the concentration suitable for supply to the fuel cell.

A configuration for reducing the ammonia concentration in the hydrogen-containing gas to the concentration suitable for supply to the fuel cell has been proposed (see Patent Literature (PTL) 1). In the configuration, an ammonia remover which contains water is disposed between the reformer and the CO remover, and ammonia in the hydrogen-containing gas discharged from the reformer is absorbed by water, so that the ammonia is removed.

Citation List

Patent Literature

[PTL 1] Japanese Unexamined Patent Application Publication No. 2012-46395

SUMMARY (SUMMARY OF THE INVENTION)

However, in the above-mentioned conventional configuration, in order to produce hydrogen-containing gas having a reduced ammonia concentration, it is necessary to provide an ammonia remover between the reformer and the CO remover. This leads to problems such as increased equipment cost and increased size of the hydrogen production device.

The present disclosure has been conceived in view of such problems of the conventional technique. An object of the present disclosure is to provide a hydrogen production device which includes a reformer and a CO remover and is capable of reducing the ammonia concentration in hydrogen-containing gas to a sufficiently low concentration, without including an ammonia remover. Another object of the present disclosure is to provide a fuel cell system which includes the hydrogen production device and a method of operating the hydrogen production device.

It is known that carbon monoxide and ammonia, among the oxidation catalysts included in CO removers, in which ruthenium, platinum or the like is supported on alumina, can be decomposed. However, in general, the ammonia decomposition activity is reduced in a CO remover included in a hydrogen production device that produces hydrogen-containing gas by a steam reforming reaction. Accordingly, after the ammonia decomposition activity of the CO remover is reduced, the hydrogen-containing gas which contains ammonia is supplied from the CO remover to the fuel cell.

First, in the oxidation catalyst of the CO remover, the chemical reaction between the oxidizing gas and the ammonia contained in the hydrogen-containing gas expressed by (Chem. 3) proceeds, so that nitrosyl (NO) is produced.

[Chem. 3] $$4NH_3 + 5O_2 \rightarrow 4NO + 6H_2O$$

[Chem. 4] $$2NO + 2H_2 \rightarrow N_2 + 2H_2O$$

[Chem. 5] $$2NO + 2CO \rightarrow N_2 + 2CO_2$$

The produced nitrosyl is strongly adsorbed on the surface of the oxidation catalyst. In order to remove the adsorbed nitrosyl, a method is available in which the nitrosyl is decomposed and desorbed into nitrogen by the reduction reaction of the nitrosyl expressed by (Chem. 4) or (Chem. 5).

However, oxidizing gas is supplied to the CO remover to oxidize carbon monoxide. Under the condition that the oxidizing gas is supplied, the above reduction reaction is unlikely to proceed. Accordingly, nitrosyl coats the surface of the oxidation catalyst, and the ammonia decomposition activity of the CO remover is reduced. Hence, hydrogen-containing gas which contains ammonia is supplied to the fuel cell from the CO remover.

As a result of diligent studies, the inventors have found out that the nitrosyl adsorbed on the surface of the oxidation catalyst can be decomposed and the ammonia decomposition activity of the oxidation catalyst of the CO remover can be improved by reducing the water vapor partial pressure in the hydrogen-containing gas supplied from the reformer to the CO remover.

When the water vapor partial pressure in the hydrogen-containing gas supplied from the reformer to the CO remover is reduced, the amount of water vapor adsorbed on the surface of the oxidation catalyst of the CO remover is decreased. Water vapor, carbon monoxide, and hydrogen are competitively adsorbed on the surface of the oxidation catalyst. Accordingly, as the amount of water vapor adsorbed on the surface of the oxidation catalyst decreases, the amount of carbon monoxide and hydrogen adsorbed increases.

At this time, on the surface of the oxidation catalyst, following the nitrosyl formation reaction expressed by (Chem. 3), the nitrosyl reduction reaction expressed by (Chem. 4) or (Chem. 5) proceeds. (Chem. 4) and (Chem. 5) are equilibrium reactions. In (Chem. 4), the adsorbed amount of water vapor as a product decreases, and in (Chem. 5), the adsorbed amount of carbon monoxide as a reactant increases. As a result, the reaction proceeds to the right side in both (Chem. 4) and (Chem. 5), and the decomposition of nitrosyl is promoted. By decomposing nitrosyl adsorbed on the surface of the oxidation catalyst, the ammonia decomposition activity of the oxidation catalyst is improved.

In order to solve the problems of the conventional technique, a hydrogen production device according to the present disclosure includes a CO remover which includes an oxidization catalyst, and reduces the carbon monoxide concentration in the hydrogen-containing gas produced by the reformer with use of the oxidation catalyst by an oxidation reaction to decompose ammonia contained in the hydrogen-containing gas. According to the parameter related to the ammonia concentration in the hydrogen-containing gas supplied to the CO remover, the water vapor partial pressure of the hydrogen-containing gas supplied to the CO remover is changed to a value lower than a first water vapor partial pressure which is the water vapor partial pressure at the time of operation when nitrogen compounds are not contained in the raw material.

Accordingly, the amount of water vapor adsorbed on the surface of the oxidation catalyst is decreased, promoting the decomposition of nitrosyl. Hence, the ammonia decomposition activity of the oxidation catalyst is improved. As a result, the ammonia concentration in the hydrogen-containing gas can be sufficiently reduced without an ammonia remover.

The hydrogen production device according to the present disclosure is capable of supplying hydrogen-containing gas having a sufficiently reduced ammonia concentration, even without an ammonia remover. Accordingly, the size and cost of the hydrogen production device can be reduced.

In addition, a fuel cell system which includes a fuel cell which generates electric power by using the hydrogen-containing gas supplied from the hydrogen production device according to the present disclosure is capable of generating electric power by using the hydrogen-containing gas having a sufficiently reduced ammonia concentration, even without an ammonia remover. Accordingly, the size and cost of the fuel cell system can be reduced, leading to a long-life fuel cell system which is capable of preventing the fuel cell from being poisoned by ammonia.

## BRIEF DESCRIPTION OF THE DRAWINGS

[FIG. 1]
FIG. 1 is a block diagram illustrating a configuration of a hydrogen production device according to a first embodiment of the present disclosure.

[FIG. 2]
FIG. 2 is a flowchart of an operation of the hydrogen production device according to the first embodiment of the present disclosure.

[FIG. 3]
FIG. 3 is a characteristic diagram illustrating a relationship between water vapor partial pressure in hydrogen-containing gas supplied to a CO remover and ammonia decomposition rate of the CO remover, according to the first embodiment of the present disclosure.

[FIG. 4]
FIG. 4 is a block diagram illustrating a configuration of a fuel cell system according to a second embodiment of the present disclosure.

[FIG. 5]
FIG. 5 is a flowchart of an operation of the fuel cell system according to the second embodiment of the present disclosure.

## DESCRIPTION OF EMBODIMENTS

A hydrogen production device and an operating method of the hydrogen production device according to the present disclosure includes: a reformer; a CO remover, a raw material supplier, a water supplier, an oxidizing gas supplier which supplies oxidizing gas to the CO remover, a heater, and a controller. The reformer produces hydrogen-containing

gas from a hydrocarbon-based raw material by a reforming reaction. The CO remover includes an oxidation catalyst, and reduces a carbon monoxide concentration in the hydrogen-containing gas with use of the oxidation catalyst by an oxidation reaction to decompose ammonia contained in the hydrogen-containing gas. The raw material supplier supplies the raw material to the reformer. The water supplier supplies, to the reformer, water to be used for the reforming reaction. The oxidizing gas supplier supplies oxidizing gas to the CO remover. The heater heats the reformer. The controller determines, based on a parameter, an upper limit value of a water vapor partial pressure in the hydrogen-containing gas supplied to the CO remover, and changes a set value of the water vapor partial pressure to a value lower than the upper limit value. The parameter is related to an ammonia concentration in the hydrogen-containing gas supplied to the CO remover.

Accordingly, the amount of water vapor adsorbed on the surface of the oxidation catalyst is reduced, and the decomposition of nitrosyl is promoted. Hence, the ammonia decomposition activity of the oxidation catalyst is improved. As a result, the ammonia concentration in the hydrogen-containing gas can be reduced even without an ammonia remover, leading to a reduced equipment cost.

Moreover, in the hydrogen production device according to the present disclosure, in order to change the water vapor partial pressure in the hydrogen-containing gas supplied to the CO remover to a value lower than a first water vapor partial pressure which is the water vapor partial pressure at the time of operation when nitrogen compounds are not contained in the raw material, according to the parameter related to the ammonia concentration in the hydrogen containing gas supplied to the CO remover, the controller performs at least one of a raw material increasing operation, a water amount reducing operation, and a heating operation. In the raw material increasing operation, the raw material supplier is controlled such that the amount of raw material supplied from the raw material supplier is changed to a value higher than a first raw material supply amount which is the amount of raw material supplied at the time of operation when nitrogen compounds are not contained in the raw material. In the water amount reducing operation, the water supplier is controlled such that the amount of water supplied from the water supplier is changed to a value lower than a first water supply amount which is the amount of water supplied at the time of operation when the nitrogen compounds are not contained in the raw material. In the heating operation, the heater is controlled such that the temperature of the reformer is changed to a value higher than a first set temperature which is the temperature at the time of operation when the nitrogen compounds are not contained in the raw material.

With this, when the raw material increasing operation is performed, it is possible to reduce the water vapor partial pressure in the hydrogen-containing gas supplied from the reformer to the CO remover, while increasing the amount of hydrogen produced by the reformer. Moreover, when the water amount reducing operation is performed, it is possible to reduce the water vapor partial pressure in the hydrogen-containing gas supplied from the reformer to the CO remover, while reducing energy required for vaporizing water when the water supplied from the water supplier is supplied to the reformer. When the heating operation is performed, the amount of hydrogen in the hydrogen-containing gas in the reformer is increased by promoting the steam reforming reaction in the reformer, so that the water vapor partial pressure in the hydrogen-containing gas supplied from the reformer to the CO remover can be reduced.

With such advantageous effects, the amount of hydrogen, energy consumption, and the amount of raw material which are required for the hydrogen production device can be realized, improving the ammonia decomposition activity of the oxidation catalyst. Accordingly, it is possible to provide hydrogen-containing gas having a sufficiently reduced ammonia concentration.

The hydrogen production device according to the present disclosure further includes a converter which reduces the carbon monoxide concentration in the hydrogen-containing gas produced by the reformer by a water-gas-shift reaction, and a converter heater which heats the converter. The controller controls the converter heater according to parameters related to the ammonia concentration in the hydrogen-containing gas supplied to the CO remover, such that the temperature at the outlet of the converter is changed to a value lower than a first converter temperature which is a temperature at the time of operation when nitrogen compounds are not contained in the raw material.

With this, a water-gas-shift reaction in the converter is promoted, so that the water vapor partial pressure in the hydrogen-containing gas supplied to the CO remover from the reformer through the converter can be reduced. As a result, decomposition of nitrosyl in the CO remover is promoted, so that hydrogen-containing gas having a sufficiently reduced ammonia concentration can be supplied while preventing change in amount of hydrogen production.

In the hydrogen production device according to the present disclosure, the controller determines a parameter related to the ammonia concentration in the hydrogen-containing gas supplied to the CO remover, based on information on the nitrogen compound concentration in the raw material.

With this, it is possible to calculate the ammonia concentration in the hydrogen-containing gas supplied to the CO remover from the information on the nitrogen compound concentration in the raw material. Accordingly, it is possible to change to an appropriate water vapor partial pressure according to the calculated ammonia concentration in the hydrogen-containing gas. As a result, it is possible to supply hydrogen-containing gas having a sufficiently reduced ammonia concentration, while reducing a decrease in production amount of the hydrogen-containing gas and reducing carbon deposition in the reforming catalyst.

Moreover, the hydrogen production device according to the present disclosure further includes an information obtaining unit which obtains information on the nitrogen compound concentration in the raw material.

With this, the nitrogen compound concentration in the raw material can be more accurately known. Accordingly, it is possible to change to an appropriate water vapor partial pressure according to the ammonia concentration in the hydrogen-containing gas supplied to the CO remover, so that ammonia decomposition activity can be improved. As a result, it is possible to supply hydrogen-containing gas having a sufficiently reduced ammonia concentration while reducing a decrease in production amount of the hydrogen-containing gas and reducing carbon deposition on the reforming catalyst.

Moreover, in the hydrogen production device according to the present disclosure, the information on the nitrogen compound concentration in the raw material includes at least one of information on the nitrogen compound concentration, information on the type of the raw material, position information, and information obtained from the supply entity of the raw material.

With this, even when the nitrogen compound concentration in the raw material supplied to the hydrogen supply device changes, the nitrogen compound concentration in the raw material can be accurately known. As a result, the ammonia decomposition activity of the oxidation catalyst can be improved according to the nitrogen compound concentration in the raw material. Accordingly, it is possible to provide hydrogen-containing gas having a sufficiently reduced ammonia concentration while reducing an increase in the amount of raw material supplied or the amount of energy consumption due to an improved ammonia decomposition activity.

A fuel cell system according to the present disclosure includes a hydrogen production device and a fuel cell which generates electric power by using hydrogen-containing gas supplied from the hydrogen production device.

With this, even when electric power is generated by using a raw material which contains nitrogen compounds, degradation of a fuel cell can be reduced even without an ammonia remover. Accordingly, it is possible to provide a fuel cell system with a reduced equipment cost.

Hereinafter, embodiments will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

(First Embodiment)

FIG. 1 is a block diagram illustrating a configuration of a hydrogen production device according to a first embodiment.

As illustrated in FIG. 1, hydrogen production device 350 according to the present embodiment includes reformer 100, converter 120, CO remover 150, controller 300, and information obtaining unit 310. Reformer 100 includes heater 10 and reformer temperature detector 50. Raw material supplier 20 and vaporizer 31 are connected to reformer 100. Fuel gas supply path 70 is connected to heater 10. Water supplier 30 is connected to reformer 100 via vaporizer 31. Converter 120 includes converter temperature detector 125 and converter heater 130. Oxidizing gas supplier 40 and hydrogen-containing gas supply path 60 are connected to CO remover 150.

In the present embodiment, the natural gas, which is used as the raw material and fuel gas, is natural gas which contains nitrogen which is a kind of nitrogen compound.

Reformer 100 reforms a hydrocarbon-based raw material to produce hydrogen-containing gas. In other words, reformer 100 uses natural gas and water vapor to produce hydrogen-containing gas by a reforming reaction. Reformer 100 is made of a stainless steel structure, and is filled with a reforming catalyst for causing a reforming reaction to proceed. In the present embodiment, a catalyst, in which ruthenium is supported on alumina beads as a support, is used as the reforming catalyst. Reformer 100 needs to be heated in order to cause a steam reforming reaction which is an endothermic reaction to proceed. In the present embodiment, reformer 100 is disposed adjacent to heater 10, and is heated by heater 10.

Vaporizer 31 supplies, to reformer 100, water vapor obtained by vaporizing the water supplied from water supplier 30.

Reformer temperature detector 50 detects the temperature of reformer 100. In the present embodiment, reformer temperature detector 50 is, for example, a thermocouple provided inside reformer 100, and directly measures the catalyst temperature.

Raw material supplier 20 supplies natural gas as a raw material to reformer 100. In the present embodiment, raw material supplier 20 is, for example, a gas pump which is capable of adjusting the flow rate.

Water supplier 30 supplies water to vaporizer 31. In the present embodiment, water supplier 30 is, for example, a water pump which is capable of adjusting the flow rate.

Converter 120 reduces the carbon monoxide contained in the hydrogen-containing gas produced by reformer

100 to a concentration of several percent by a water-gas shift reaction. Converter 120 is made of a stainless steel structure, and is filled with a conversion catalyst that causes a water-gas shift reaction to proceed. In the present embodiment, a catalyst which contains copper and zinc is used as the conversion catalyst.

Converter temperature detector 125 detects the temperature of converter 120. In the present embodiment, converter temperature detector 125 is, for example, a thermocouple provided near and inside the outlet of converter 120, and directly measures the temperature of the catalyst near the outlet of converter 120. Hereinafter, the temperature of converter 120 refers to the temperature of the catalyst near the outlet of converter 120 detected by converter temperature detector 125.

Converter heater 130 heats converter 120. In the present embodiment, converter heater 130 is, for example, a heater.

CO remover 150 reduces, by an oxidation reaction, carbon monoxide contained in the hydrogen-containing gas discharged from converter 120 to the concentration required for use by a hydrogen utilization device (not illustrated) externally connected to hydrogen production device 350, that is, for example, to 10 ppm or less. CO remover 150 is filled with an oxidation catalyst. In the present embodiment, a catalyst, in which ruthenium is supported on alumina beads as a support, is used as the oxidation catalyst.

Oxidizing gas supplier 40 supplies air as oxidizing gas to CO remover 150. In the present embodiment, oxidizing gas supplier 40 is, for example, a fan which supplies air.

Hydrogen-containing gas supply path 60 is a path for supplying the hydrogen-containing gas discharged from CO remover 150, that is, the hydrogen-containing gas having a reduced concentration of carbon monoxide, to the outside of hydrogen production device 350.

Fuel gas supply path 70 is a path for supplying natural gas to heater 10 as fuel gas.

Heater 10 heats reformer 100 and vaporizer 31 with the heat generated when the fuel gas is combusted. In the present embodiment, heater 10 uses, as a fuel, natural gas supplied via fuel gas supply path 70.

Information obtaining unit 310 obtains information necessary for determining a parameter related to the ammonia concentration in the hydrogen-containing gas supplied to CO remover 150. Information obtaining unit 310 is electrically connected to controller 300. In the present embodiment, information obtaining unit 310 is, for example, a wireless local area network (LAN) adapter for receiving information on the nitrogen concentration in the natural gas as a raw material provided by the supply entity of the natural gas supplied to hydrogen production device 350.

Controller 300 controls the operation of hydrogen production device 350. In the present embodiment, controller 300 is a microcomputer including a signal input and output unit (not illustrated), a computation processor (not illustrated), and a storage (not illustrated) for storing a control program.

The operation and effect of hydrogen production device 350 according to the present embodiment configured as described above will be described with reference to the flowchart of FIG. 2.

The following operations are performed by controller 300 controlling heater 10, raw material supplier 20, water supplier 30, oxidizing gas supplier 40, and converter heater 130. Oxidizing gas supplier 40 is set based on the reformer temperature detected by reformer temperature detector 50, the amount of natural gas supplied from raw material supplier 20, and the amount of water supplied from water supplier 30, so as to supply the amount of air which contains oxygen having twice the number of molecules relative to the carbon monoxide contained in the hydrogen-containing gas obtained by the equilibrium calculation.

FIG. 2 is a flowchart of an operation of hydrogen production device 350 according to the first embodiment of the present disclosure.

First, controller 300 determines whether or not a request to start the operation of hydrogen production device 350 has been made (S11). When determining that the operation start request has not been made, controller 300 proceeds to No in S11 and repeatedly performs the determination of S11 until the operation start request is made. When determining that the operation start request has been made, controller 300 proceeds to Yes in S11 and proceeds to S12. When determining that the operation start request has been made, controller 300 sets the operating parameters to the values at the time of operation when nitrogen is not contained in the natural gas.

Here, the operating parameters include the amount of natural gas supplied from raw material supplier 20, the amount of water supplied from water supplier 30, the temperature of reformer 100, the temperature of converter 120, and the amount of air supplied from oxidizing gas supplier 40. In the present embodiment, the amount of natural gas supplied from raw material supplier 20 is set to 2 L/min, that is, a first raw material supply amount which is the amount of natural gas supplied at the time of operation when nitrogen is not contained in the natural gas. The amount of water supplied from water supplier 30 is set to 5.62 cc/min, that is, a first water supply amount which is the amount of water supplied at the time of operation when nitrogen is not contained in the natural gas. The target temperature of reformer 100 is set to 630°C, that is, a first set temperature which is the temperature when nitrogen is not contained in the natural gas. The target temperature of converter 120 is set to 250°C which is a first converter temperature. The amount of air supplied from oxidizing gas supplier 40 is set to 0.56 L/min which is a first oxidizing gas supply amount (S12).

Next, controller 300 determines upper limit value a of the water vapor partial pressure based on the information

provided by the supply entity of the natural gas and obtained by information obtaining unit 310, the target value of the ammonia concentration in the hydrogen-containing gas discharged from CO remover 150, and the operating parameters (S13).

In the present embodiment, the storage of controller 300 stores an ammonia concentration table and relational expression between the water vapor partial pressure in the hydrogen-containing gas supplied to CO remover 150 and the ammonia decomposition rate of CO remover 150. The ammonia concentration table allows reference to the ammonia concentration in the hydrogen-containing gas supplied to CO remover 150 from the nitrogen concentration in the natural gas supplied to reformer 100, the temperature of reformer 100, and the amount of natural gas supplied from raw material supplier 20.

Controller 300 also includes a chemical equilibrium calculation function which calculates the carbon monoxide concentration and the water vapor partial pressure in the hydrogen-containing gas supplied to CO remover 150 by equilibrium calculation based on the temperature of reformer 100, the amount of natural gas supplied from raw material supplier 20, the amount of water supplied from water supplier 30, and the temperature of converter 120.

Here, a method of determining the upper limit value of the water vapor partial pressure when the nitrogen concentration in the supplied natural gas is, for example, 15% in the information obtained by information obtaining unit 310 from the supply entity of the natural gas will be described.

In the present embodiment, the amount of natural gas supplied from raw material supplier 20 is 2.0 L/min. The average nitrogen concentration in natural gas is 15%. The target temperature of reformer 100 set in S12 is 630 °C.

The ammonia concentration in the hydrogen-containing gas produced by reformer 100 under the above conditions is 6 ppm. The ammonia concentration in the hydrogen-containing gas produced by reformer 100 is derived from the ammonia concentration table in the storage of controller 300. The target value of the ammonia concentration in the hydrogen-containing gas discharged from CO remover 150 is, for example, 1 ppm.

From the above conditions, the upper limit value of the water vapor partial pressure of the hydrogen-containing gas supplied to CO remover 150 is determined. The upper limit value of the water vapor partial pressure is determined based on the relational expression between the water vapor partial pressure in the hydrogen-containing gas supplied to the CO remover and the ammonia decomposition rate of the CO remover stored in controller 300.

FIG. 3 is a characteristic diagram illustrating a relationship between water vapor partial pressure of the hydrogen-containing gas supplied to CO remover 150 and ammonia decomposition rate of the CO remover in hydrogen production device 350 according to the first embodiment of the present disclosure.

As illustrated in FIG. 3, the water vapor partial pressure and the ammonia decomposition rate of CO remover 150 in hydrogen production device 350 according to the present embodiment have such a relationship that the ammonia decomposition rate of CO remover 150 increases as the water vapor partial pressure decreases.

The relational expression between the water vapor partial pressure in the hydrogen-containing gas supplied to the CO remover and the ammonia decomposition rate of the CO remover, which is derived from the above relationship, is defined as (Math. 1) and (Math. 2). The upper limit value of the water vapor partial pressure is calculated by (Math. 1) and (Math. 2).

[Math. 1]

$$a = 869.65 \times \frac{b}{c} - 17.49 \qquad (\frac{b}{c} \leqq 0.168)$$

[Math. 2]

$$a = 212.45 \times \frac{b}{c} + 93.21 \qquad (\frac{b}{c} > 0.168)$$

Here, a is the upper limit value (mmHg) of the water vapor partial pressure of the hydrogen-containing gas supplied to CO remover 150. In addition, b is the upper limit value (ppm) of the ammonia concentration in the hydrogen-containing gas at the outlet of the CO remover, and c is the ammonia concentration (ppm) in the hydrogen-containing gas supplied to CO remover 150.

In the present embodiment, as described above, b is 1 ppm, c is 6 ppm, and b/c is 0.166. Accordingly, upper

limit value a of the water vapor partial pressure is derived from (Math. 1). In the present embodiment, upper limit value a of the water vapor partial pressure is determined to be 127.45 mmHg.

Next, controller 300 determines whether or not the relationship between upper limit value a of the water vapor partial pressure and set value A of the water vapor partial pressure calculated by the chemical equilibrium calculation function from the operating parameters at the time of determination satisfies $a \geq A$ (S14). When determining that $a \geq A$ is satisfied, controller 300 proceeds to Yes in S14 and proceeds to S16. On the other hand, when determining that the relation of $a \geq A$ is not satisfied, controller 300 proceeds to No in S14 and proceeds to S15.

In the present embodiment, set value A of the water vapor partial pressure in the process flow at the time of the initial execution is 176.32 mmHg which is a first water vapor partial pressure. Since a is 127.45 mmHg, controller 300 proceeds to No in S14 and proceeds to S15.

In S15, controller 300 reduces the amount of water supplied from water supplier 30 by 0.1 cc/min, changes set value A of the water vapor partial pressure according to the value after the reduction, and returns to S14.

The amount of water supplied from water supplier 30 is reduced by 0.1 cc/min from the initially set first water supply amount of 5.62 cc/min each time S15 is performed. As a result, when the amount of water supply becomes 3.72 cc/min, set value A of the water vapor partial pressure becomes 123.12 mmHg, which is lower than or equal to 127.45 mmHg which is upper limit value a of the water vapor partial pressure. Accordingly, controller 300 proceeds to Yes in S14 and proceeds to S16.

The amount of air supplied from oxidizing gas supplier 40 is changed to 0.65 L/min according to the change in amount of water supplied from water supplier 30.

When the condition of $a \geq A$ is satisfied in S14, controller 300 operates heater 10 and converter heater 130. Heater 10 heats reformer 100 by combusting the natural gas supplied to heater 10 via fuel gas supply path 70. Converter heater 130 heats converter 120 (S16).

Next, controller 300 determines whether or not the temperature of reformer 100 has reached 630°C which is the target temperature of reformer 100, and the temperature of converter 120 has reached 250°C which is the target temperature of converter 120 (S17). In the present embodiment, controller 300 proceeds to No in S17 and repeatedly performs the determination of S17 until the temperatures of both reformer 100 and converter 120 reach the respective target temperatures. When determining that the temperatures of both reformer 100 and converter 120 have reached their respective target temperatures, controller 300 proceeds to S18.

In S17, when the temperatures of both reformer 100 and converter 120 have reached the respective target temperatures, controller 300 operates raw material supplier 20, water supplier 30, and oxidizing gas supplier 40 according to the set values. Accordingly, hydrogen production device 350 starts producing hydrogen-containing gas (S18).

Reformer 100 uses the natural gas and water supplied to reformer 100 to produce hydrogen-containing gas by a steam reforming reaction. The produced hydrogen-containing gas contains ammonia produced from nitrogen contained in the natural gas.

The hydrogen-containing gas produced in reformer 100 flows into converter 120. Converter 120 reduces the carbon monoxide and the water vapor partial pressure in the hydrogen-containing gas by a water-gas shift reaction. The hydrogen-containing gas discharged from converter 120 flows into CO remover 150. CO remover 150 oxidizes carbon monoxide in the oxidation catalyst of CO remover 150 by an oxidation reaction with oxygen in the air supplied from oxidizing gas supplier 40. At this time, the ammonia contained in the hydrogen-containing gas is oxidized to nitrosyl by oxygen in the air. Nitrosyl is reduced to nitrogen by hydrogen or carbon monoxide in the hydrogen-containing gas. The hydrogen-containing gas having a sufficiently reduced ammonia is supplied to the outside of hydrogen production device 350 via hydrogen-containing gas supply path 60.

While hydrogen production device 350 is producing hydrogen-containing gas, controller 300 determines whether or not a request to stop the operation of hydrogen production device 350 has been made (S19). When determining that the operation stop request has not been made, controller 300 proceeds to No in S19 and repeatedly performs the determination of S19 until the operation stop request is made. When determining that the operation stop request has been made, controller 300 proceeds to Yes in S19 to stop the operation of hydrogen production device 350.

As described above, in the present embodiment, controller 300 operates hydrogen production device 350 by setting, based on the information obtained by information obtaining unit 310, upper limit value a of the water vapor partial pressure in the hydrogen-containing gas supplied to CO remover 150 to a value lower than the first water vapor partial pressure, that is, the initial water vapor partial pressure set value A, which is the water vapor partial pressure in the hydrogen-containing gas supplied to CO remover 150 at the time of operation when nitrogen is not contained in the natural gas. As a result, the ammonia concentration in the hydrogen-containing gas supplied to the outside of hydrogen production device 350 via hydrogen-containing gas supply path 60 is 0.96 ppm

The first water vapor partial pressure, which is the water vapor partial pressure in the hydrogen-containing gas supplied to CO remover 150 at the time of operation when nitrogen is not contained in the natural gas in hydrogen production device 350 according to the present embodiment is 176.32 mmHg. When hydrogen-containing gas is produced by reformer 100 using natural gas which contains 15% nitrogen and the water vapor partial pressure in the hydrogen-containing gas supplied to CO remover 150 is 176.32 mmHg, the ammonia concentration in the hydrogen-containing gas is 3.72 ppm. By changing the water vapor partial pressure to a value lower than the first water vapor partial pressure, it is possible to reduce the ammonia concentration in the hydrogen-containing gas.

When the water vapor partial pressure is set to a value lower than the first water vapor partial pressure, which is the water vapor partial pressure at the time of operation when nitrogen is not contained in the natural gas, the water vapor partial pressure in the hydrogen-containing gas supplied from reformer 100 to CO remover 150 is lower than that during normal operation. This reduces the amount of water vapor adsorbed on the surface of the oxidation catalyst. Water vapor, carbon monoxide, and hydrogen are competitively adsorbed on the surface of the oxidation catalyst. Accordingly, as the amount of water vapor on the surface of the oxidation catalyst decreases, the adsorbed amount of carbon monoxide and hydrogen increases.

At this time, on the surface of the oxidation catalyst, the nitrosyl formation reaction expressed by (Chem. 3) is followed by the nitrosyl reduction reaction expressed by (Chem. 4) or (Chem. 5). (Chem. 4) and (Chem. 5) are equilibrium reactions. In (Chem. 4), the adsorbed amount of water vapor as a product decreases, and in (Chem. 5), the adsorbed amount of carbon monoxide as a reactant increases. As a result, the reaction proceeds to the right side in both (Chem. 4) and (Chem. 5), and the decomposition of nitrosyl is promoted. By decomposing nitrosyl adsorbed on the surface of the oxidation catalyst, the ammonia decomposition activity of the oxidation catalyst is improved. Accordingly, the ammonia concentration in the hydrogen-containing gas can be reduced even without an ammonia remover.

As described above, hydrogen production device 350 according to the present embodiment includes reformer 100, converter 120, CO remover 150, controller 300, and information obtaining unit 310. Reformer 100 includes heater 10 and reformer temperature detector 50. Raw material supplier 20 and vaporizer 31 are connected to reformer 100. Fuel gas supply path 70 is connected to heater 10. Water supplier 30 is connected to reformer 100 via vaporizer 31. Converter 120 includes converter temperature detector 125 and converter heater 130. Oxidizing gas supplier 40 and hydrogen-containing gas supply path 60 are connected to CO remover 150.

Reformer 100 reforms natural gas which contains nitrogen to produce hydrogen-containing gas. Raw material supplier 20 supplies natural gas to reformer 100. Water supplier 30 supplies water for reforming. Vaporizer 31 vaporizes the water supplied from water supplier 30, and supplies water vapor to reformer 100. Heater 10 combusts natural gas to heat reformer 100. Converter 120 reduces the carbon monoxide concentration in the hydrogen-containing gas discharged from reformer 100 by a water-gas shift reaction. CO remover 150 uses an oxidation catalyst to reduce the carbon monoxide concentration in the hydrogen-containing gas discharged from converter 120 by an oxidation reaction, and decomposes ammonia contained in the hydrogen-containing gas. Oxidizing gas supplier 40 supplies air to CO remover 150. Hydrogen-containing gas supply path 60 supplies hydrogen-containing gas from CO remover 150 to the outside. Converter heater 130 heats converter 120. Information obtaining unit 310 obtains information on the nitrogen concentration in the natural gas provided by the supply entity of the natural gas. Reformer temperature detector 50 detects the temperature of reformer 100. Converter temperature detector 125 detects the temperature of converter 120.

Controller 300 controls water supplier 30 according to the information on the nitrogen concentration in the natural gas provided by the supply entity of the natural gas which is a parameter related to the ammonia concentration in the hydrogen-containing gas supplied to CO remover 150, such that the water vapor partial pressure in the hydrogen-containing gas supplied to CO remover 150 is changed to a value lower than the first water vapor partial pressure which is the water vapor partial pressure at the time of operation when nitrogen compounds are not contained in the natural gas. As a result, the ammonia decomposition reaction of the oxidation catalyst of CO remover 150 is promoted. Accordingly, even when hydrogen-containing gas is produced using natural gas which contains nitrogen, it is possible to produce hydrogen-containing gas having a reduced ammonia concentration, without an ammonia remover. This leads to reduced equipment cost.

In the present embodiment, the configuration and operating method of hydrogen production device 350 described above are used, but the present disclosure is not limited to such an example. For example, the following configuration and operating method can be used.

In the present embodiment, the case where stream reforming is performed on natural gas which contains nitrogen as a raw material has been described. However, the reforming reaction may be an autothermal method in which two reactions, a partial oxidation reaction and a steam reforming reaction, proceed. In this case, even when the nitrogen-free hydrocarbon and nitrogen-containing air are mixed and supplied to reformer 100 as a raw material, the same advantageous effects as those of the present embodiment can be obtained.

The reforming catalyst of reformer 100 is not limited to a catalyst in which ruthenium is supported, but may be, for example, a catalyst in which nickel is supported. Moreover, the oxidation catalyst is not limited to a catalyst on which ruthenium is supported, but may be, for example, a catalyst in which platinum, rhodium, or palladium is supported.

In the present embodiment, the amount of air supplied from oxidizing gas supplier 40 is set such that oxygen molecules twice the number of carbon monoxide molecules contained in the hydrogen-containing gas are supplied. However, the present disclosure is not limited to such an example. For example, the amount of air supplied from oxidizing gas supplier 40 may be appropriately set according to the carbon monoxide concentration in the hydrogen-containing

gas discharged from CO remover 150.

Moreover, in the present embodiment, information obtaining unit 310 obtains the information obtained from the supply entity of the natural gas, but the present disclosure is not limited to such an example. Information obtaining unit 310 may obtain any information as long as the ammonia concentration in the hydrogen-containing gas supplied to the CO remover can be estimated. For example, information obtaining unit 310 may obtain information on the nitrogen concentration in natural gas, information on the type of natural gas, and position information. It may also be that information obtaining unit 310 is a nitrogen concentration meter which directly measures the nitrogen concentration in natural gas. Moreover, it may be that information obtaining unit 310 is not included, and that the nitrogen concentration in natural gas is estimated from, for example, the ratio of the amount of natural gas supplied to heater 10 to the amount of heat generated by heater 10 or the ratio of the amount of natural gas supplied from raw material supplier 20 to the amount of heat absorbed by the reforming reaction of reformer 100.

In the present embodiment, the target value of the ammonia concentration in the hydrogen-containing gas is set to 1 ppm, but the target value is not limited to such an example. The target value may be changed according to the concentration required by a hydrogen-utilizing device which uses hydrogen-containing gas.

In the present embodiment, in S15, the amount of water supplied from water supplier 30 is reduced by 0.1 cc/min, but the present disclosure is not limited to such an example. For example, by reducing the water supply amount by less than 0.1 cc/min, the influence on the hydrogen production amount may be further reduced so that the ammonia concentration approaches the target value.

Moreover, in the present embodiment, (Math. 1) and (Math. 2) are relational expressions experimentally obtained. Accordingly, (Math. 1) and (Math. 2) may be changed according to the ammonia resolution of the CO remover.

(Second Embodiment)

Next, a second embodiment will be described.

FIG. 4 is a block diagram illustrating a configuration of a fuel cell system according to the second embodiment. In fuel cell system 400 illustrated in FIG. 4, the same structural elements as those in FIG. 1 are designated by the same reference numerals, and the description thereof will be omitted as appropriate.

As illustrated in FIG. 4, fuel cell system 400 according to the present embodiment includes the structural elements of hydrogen production device 350 according to the first embodiment illustrated in FIG. 1 and fuel cell 200 which generates electric power using the hydrogen-containing gas supplied from CO remover 150 via hydrogen-containing gas supply path 61. Fuel cell system 400 according to the present embodiment includes information obtaining unit 311 which obtains information on the nitrogen concentration in natural gas, instead of information obtaining unit 310 according to the first embodiment. Fuel cell system 400 according to the present embodiment includes controller 301 which controls fuel cell system 400, instead of controller 300 according to the first embodiment.

Fuel cell system 400 is a fuel cell system which generates electric power by using natural gas which contains nitrogen, which is a kind of nitrogen compound, as a raw material and fuel gas, using air as oxidizing gas, and using the produced hydrogen-containing gas.

Fuel cell system 400 includes hydrogen-containing gas supply path 61, fuel cell 200, information obtaining unit 311, and controller 301 which controls fuel cell system 400.

Hydrogen-containing gas supply path 61 is a path for supplying, to fuel cell 200, the hydrogen-containing gas discharged from CO remover 150.

Fuel cell 200 is a fuel cell which generates electric power by using hydrogen-containing gas supplied via hydrogen-containing gas supply path 61. In the present embodiment, fuel cell 200 is, for example, a PEFC which includes a polyelectrolyte membrane.

Information obtaining unit 311 obtains information on the nitrogen concentration in natural gas. In the present embodiment, information obtaining unit 311 is, for example, a nitrogen concentration sensor which measures the nitrogen concentration in natural gas.

Controller 301 controls the operation of fuel cell system 400. In the present embodiment, controller 301 is, for example, a microcomputer including a signal input and output unit (not illustrated), a computation processor (not illustrated), and a storage (not illustrated) for storing a control program.

In a similar manner to controller 300 according to the first embodiment, the storage of controller 301 stores an ammonia concentration table and relational expression between the water vapor partial pressure in the hydrogen-containing gas supplied to CO remover 150 and the ammonia decomposition rate of CO remover 150. The ammonia concentration table allows reference of the ammonia concentration in the hydrogen-containing gas supplied to CO remover 150 from the nitrogen concentration in the natural gas supplied to reformer 100, the temperature of reformer 100, and the amount of natural gas supplied from raw material supplier 20.

The storage of controller 301 stores an operating parameter table. The operating parameter table is a set of the target temperature of reformer 100, the amount of natural gas supplied, the amount of water supplied, and the target

temperature of converter 120 which is less than the upper limit value of the water vapor partial pressure in the hydrogen-containing gas supplied to CO remover 150.

Controller 301 also includes a chemical equilibrium calculation function which calculates the carbon monoxide concentration and the water vapor partial pressure in the hydrogen-containing gas supplied to CO remover 150 by equilibrium calculation based on the temperature of reformer 100, the amount of natural gas supplied from raw material supplier 20, the amount of water supplied from water supplier 30, and the temperature of converter 120.

The operation and effects of fuel cell system 400 according to the present embodiment configured as described above will be described below, focusing on the differences from the first embodiment.

The following operations are performed by controller 301 controlling heater 10, raw material supplier 20, water supplier 30, oxidizing gas supplier 40, and converter heater 130. Oxidizing gas supplier 40 is set based on the reformer temperature detected by reformer temperature detector 50, the amount of natural gas supplied from raw material supplier 20, and the amount of water supplied from water supplier 30, so as to supply the amount of air which contains oxygen having twice the number of molecules relative to the carbon monoxide contained in the hydrogen-containing gas obtained by the equilibrium calculation.

FIG. 5 is a flowchart of an operation of fuel cell system 400 according to the second embodiment of the present disclosure.

First, controller 301 determines whether or not a request to start operation of fuel cell system 400 has been made (S31). When determining that the operation start request has not been made, controller 301 proceeds to No in S31 and repeatedly performs the determination of S31 until the operation start request is made. When determining that the operation start request has been made, controller 301 proceeds to Yes in S31, and proceeds to S32. When determining that the operation start request has been made, controller 301 sets the operating parameters to the values at the time of operation when nitrogen is not contained in the natural gas.

Here, the operating parameters include the amount of natural gas supplied from raw material supplier 20, the amount of water supplied from water supplier 30, the temperature of reformer 100, the temperature of converter 120, and the amount of air supplied from oxidizing gas supplier 40. In the present embodiment, the amount of natural gas supplied from raw material supplier 20 is set to 2 L/min which is the first raw material supply amount. The amount of water supplied from water supplier 30 is set to 5.62 cc/min which is the first water supply amount. The target temperature of converter 100 is set to 630 °C which is the first set temperature. The target temperature of converter 120 is set to 250 °C which is the first converter temperature. The amount of air supplied from oxidizing gas supplier 40 is set to 0.56 L/min which is the first oxidizing gas supply amount (S32).

Next, controller 301 determines upper limit value a of the water vapor partial pressure from the nitrogen concentration in the natural gas obtained by information obtaining unit 311, the target value of the ammonia concentration in the hydrogen-containing gas discharged from CO remover 150, and the operating parameters (S33).

In the present embodiment, the nitrogen concentration in the natural gas obtained by information obtaining unit 311 is 15%. The amount of natural gas supplied from raw material supplier 20 is 2.0 L/min. The target temperature of reformer 100 set in S32 is 630 °C.

The ammonia concentration in the hydrogen-containing gas produced by reformer 100 under the above conditions is 6 ppm. The ammonia concentration in the hydrogen-containing gas produced by reformer 100 is derived from the ammonia concentration table in the storage of controller 301. The target value of the ammonia concentration in the hydrogen-containing gas discharged from CO remover 150 is, for example, 1 ppm.

From the above conditions, in a similar manner to the first embodiment, upper limit value a of the water vapor partial pressure is obtained from (Math. 1) and (Math. 2), and upper limit value a of the water vapor partial pressure is determined to be 127.45 mmHg (S33).

Next, controller 301 determines whether or not the relationship between upper limit value a of the water vapor partial pressure and set value A of the water vapor partial pressure calculated by the chemical equilibrium calculation function based on the operating parameters at the time of determination satisfies $a \geq A$ (S34). When determining that $a \geq A$ is satisfied, controller 301 proceeds to Yes in S34 and proceeds to S36. On the other hand, when determining that $a \geq A$ is not satisfied, controller 301 proceeds to No in S34 and proceeds to S35.

In the present embodiment, set value A of the water vapor partial pressure in the process flow at the time of the initial execution is 176.32 mmHg which is the first water vapor partial pressure. Since a is 127.45 mmHg, controller 301 proceeds to No in S34 and proceeds to S35.

In S35, controller 301 changes the target temperature of reformer 100 to a temperature higher than the first set temperature. This operation is also referred to as a heating operation. Controller 301 also changes the amount of natural gas supplied from raw material supplier 20 to a value higher than the first raw material supply amount. This operation is also referred to as a raw material increasing operation. Controller 301 also changes the amount of water supplied from water supplier 30 to a value lower than the first water supply amount. This operation is also referred to as a water amount reducing operation. Controller 301 also changes the target temperature of converter 120 to a value lower than the first converter temperature.

In the present embodiment, according to the operating parameter table in the storage of controller 301, water vapor partial pressure A is set by a set of the target temperature of reformer 100, the amount of natural gas supplied, the amount of water supplied, and the target temperature of converter 120 which is lower than upper limit value a of the vapor water partial pressure. Accordingly, the target temperature of reformer 100 is changed to 650°C which is higher than the first set temperature. The amount of natural gas supplied from raw material supplier 20 is changed to 2.35 L/min which is higher than the first raw material supply amount. The amount of water supplied from water supplier 30 is changed to 4.83 cc/min which is lower than the first water supply amount. The target temperature of converter 120 is changed to 225 °C which is lower than the first converter temperature.

In the present embodiment, the ammonia concentration in the hydrogen-containing gas produced by reformer 100 is 6.33 ppm from the operating parameters set in S35. At this time, from (Math. 1), upper limit value a of the water vapor partial pressure is 119.90 mmHg, and water vapor partial pressure set value A is 119.32 mmHg. Accordingly, since the condition of a ≥ A is satisfied, controller 301 proceeds to Yes in S34 and proceeds to S36.

When the condition of a ≥ A is satisfied in S34, controller 301 operates heater 10 and converter heater 130. Heater 10 heats reformer 100 by combusting the natural gas supplied to heater 10 via fuel gas supply path 70. Converter heater 130 heats converter 120 (S36). At this time, the target temperature of reformer 100 is 650 °C, and the target temperature of converter 120 is 225 °C.

Next, controller 301 determines whether or not the temperature of reformer 100 has reached 650°C which is the target temperature of reformer 100, and whether or not the temperature of converter 120 has reached 225°C which is the target temperature of converter 120 (S37). In the present embodiment, controller 301 proceeds to No in S37 and repeatedly performs the determination of S37 until the temperatures of both reformer 100 and converter 120 reach the respective target temperatures. When determining that the temperatures of both reformer 100 and converter 120 have reached their respective target temperatures, controller 301 proceeds to S38.

In S37, when the temperatures of both reformer 100 and converter 120 have reached their respective target temperatures, controller 301 operates raw material supplier 20, water supplier 30, and oxidizing gas supplier 40 according to the set values. As a result, fuel cell system 400 starts power generation (S38).

In the present embodiment, the amount of natural gas supplied from raw material supplier 20 is set to 2.35 L/min. The amount of water supplied from water supplier 30 is set to 4.83 cc/min. The amount of air supplied from oxidizing gas supplier 40 is set to 0.562 L/min.

Reformer 100 uses the natural gas and water supplied to reformer 100 to produce hydrogen-containing gas by a steam reforming reaction. The produced hydrogen-containing gas contains ammonia produced from the nitrogen contained in the natural gas.

The hydrogen-containing gas produced by reformer 100 flows into converter 120. Converter 120 reduces the carbon monoxide and the water vapor partial pressure in the hydrogen-containing gas by a water-gas shift reaction. The hydrogen-containing gas discharged from converter 120 flows into CO remover 150. CO remover 150 oxidizes carbon monoxide in the oxidation catalyst of CO remover 150 by an oxidation reaction with oxygen in the air supplied from oxidizing gas supplier 40. At this time, the ammonia contained in the hydrogen-containing gas is oxidized to nitrosyl by oxygen in the air. Nitrosyl is reduced to nitrogen by hydrogen or carbon monoxide in the hydrogen-containing gas. The hydrogen-containing gas in which ammonia is sufficiently reduced is supplied to fuel cell 200 via hydrogen-containing gas supply path 61. Fuel cell 200 generates electric power using the hydrogen-containing gas supplied via hydrogen-containing gas supply path 61.

When fuel cell 200 is generating electric power using the hydrogen-containing gas supplied from hydrogen production device 350, controller 301 determines whether or not a request to stop the operation of fuel cell system 400 has been made (S39). When determining that the operation stop request has not been made, controller 301 proceeds to No in S39 and repeatedly performs the determination of S39 until the operation stop request is made. When determining that the operation stop request has been made, controller 301 proceeds to Yes in S39 to stop the operation of fuel cell system 400.

As described above, in the present embodiment, controller 301 operates fuel cell system 400 by setting upper limit a of the water vapor partial pressure in the hydrogen-containing gas supplied to CO remover 150 to 127.45 mmHg based on the nitrogen concentration in the natural gas obtained by information obtaining unit 311. As a result, the ammonia concentration in the hydrogen-containing gas supplied from CO remover 150 to fuel cell 200 is 0.99 ppm.

In the present embodiment, the first water vapor partial pressure, which is the water vapor partial pressure at the time of operation when nitrogen is not contained, is 176.32 mmHg. When hydrogen-containing gas is produced using natural gas which contains 15% nitrogen, and the water vapor partial pressure is 176.32 mmHg, the ammonia concentration in the hydrogen-containing gas supplied from CO remover 150 to fuel cell 200 is 3.72 ppm. By changing the water vapor partial pressure to a value lower than the first water vapor partial pressure, it is possible to reduce the ammonia concentration in the hydrogen-containing gas.

In the first embodiment, the amount of hydrogen in the hydrogen-containing gas discharged from CO remover 150 is 5.77 L/min which is lower than the amount of hydrogen of 7.50 L/min when nitrogen is not contained. On the other

hand, in the present embodiment, it is possible to reduce the ammonia concentration while maintaining the hydrogen amount of at least 7.50 L/min, which is the amount of hydrogen when nitrogen is not contained. This is because the water vapor partial pressure can be reduced while maintaining the amount of hydrogen produced from natural gas, by the steam reforming reaction being promoted by increasing the temperature of reformer 100 and the water-gas shift reaction being promoted by decreasing the temperature of converter 120.

As described above, fuel cell system 400 according to the present embodiment includes reformer 100, converter 120, CO remover 150, fuel cell 200, controller 301, and information obtaining unit 311. Reformer 100 includes heater 10 and reformer temperature detector 50. Raw material supplier 20 and vaporizer 31 are connected to reformer 100. Fuel gas supply path 70 is connected to heater 10. Water supplier 30 is connected to reformer 100 via vaporizer 31. Converter 120 includes converter temperature detector 125 and converter heater 130. Oxidizing gas supplier 40 and hydrogen-containing gas supply path 60 are connected to CO remover 150.

Reformer 100 reforms natural gas which contains nitrogen to produce hydrogen-containing gas. Raw material supplier 20 supplies natural gas to reformer 100. Water supplier 30 supplies water for reforming. Vaporizer 31 vaporizes the water supplied from water supplier 30, and supplies water vapor to reformer 100. Heater 10 combusts natural gas to heat reformer 100. Converter 120 reduces the carbon monoxide concentration in the hydrogen-containing gas discharged from reformer 100 by a water-gas shift reaction. CO remover 150 uses an oxidation catalyst to reduce the carbon monoxide concentration in the hydrogen-containing gas discharged from converter 120 by an oxidation reaction, and decomposes ammonia contained in the hydrogen-containing gas. Oxidizing gas supplier 40 supplies air to CO remover 150. Converter heater 130 heats converter 120. Information obtaining unit 311 measures the nitrogen concentration in the natural gas, and obtains the information on the nitrogen concentration in the natural gas. Reformer temperature detector 50 detects the temperature of reformer 100. Converter temperature detector 125 detects the temperature of converter 120.

Fuel cell 200 generates electric power by using the hydrogen-containing gas supplied from CO remover 150 via hydrogen-containing gas supply path 61.

In order to change the water vapor partial pressure in the hydrogen-containing gas supplied to CO remover 150 to the value, 119.32 mmHg, which is lower than the first water vapor partial pressure of 176.32 mmHg, which is the water vapor partial pressure at the time of operation when nitrogen compounds are not contained in the natural gas, according to the information on the nitrogen concentration in natural gas, which is a parameter related to the ammonia concentration in the hydrogen-containing gas supplied to CO remover 150, controller 301 controls the supply amount from raw material supplier 20, such that the amount of natural gas supplied from raw material supplier 20 is changed to 2.35 L/min, which is higher than the first raw material supply amount of 2 L/min, which is the amount of natural gas supplied at the time of operation when nitrogen is not contained in the natural gas. The amount of water supplied by water supplier 30 is changed to 4.83 cc/min, which is lower than the first water supply amount of 5.62 cc/min, which is the amount of water supplied at the time of operation when nitrogen is not contained in the natural gas. Moreover, heater 10 is controlled such that the temperature of reformer 100 is changed to 650°C, which is higher than the first set temperature of 630°C, which is the temperature when nitrogen is not contained in the natural gas. In addition, oxidizing gas supplier 40 is controlled such that the amount of air supplied is changed to the first oxidizing gas supply amount of 0.56 L/min which is a value within the range of 0.56 L/min or higher of the air supply amount at the time of operation when nitrogen is not contained in the natural gas. The temperature at the outlet of converter 120 is changed to 225°C which is lower than the first converter temperature of 250°C which is the temperature at the time of operation when nitrogen is not contained in the natural gas.

With this, it is possible to supply hydrogen-containing gas having a sufficiently reduced ammonia concentration from CO remover 150 to fuel cell 200 without an ammonia remover and without reducing the amount of hydrogen. Accordingly, it is possible to provide fuel cell system 400 having a long life at low cost.

In the present embodiment, the configuration and operating method of fuel cell system 400 described above are used, but the present disclosure is not limited to such an example. For example, the following configuration and operating method can be used.

In fuel cell system 400 according to the present embodiment, the water vapor partial pressure in the hydrogen-containing gas is changed by simultaneously changing the natural gas supply amount, the water supply amount, the temperature of reformer 100, and the temperature of converter 120. However, at least one of the above may be changed. For example, the water vapor partial pressure may be changed by increasing only the natural gas supply amount, or by changing the temperature of reformer 100 and the temperature of converter 120.

In the present embodiment, the amount of air supplied from oxidizing gas supplier 40 is set to supply oxygen molecules twice the number of carbon monoxide molecules contained in the hydrogen-containing gas. However, the present disclosure is not limited to such an example. For example, the amount of air supplied from oxidizing gas supplier 40 may be appropriately changed according to the carbon monoxide concentration in the hydrogen-containing gas discharged from CO remover 150.

In the present embodiment, the nitrogen concentration in the natural gas is used as a parameter related to the

ammonia concentration in the hydrogen-containing gas supplied to CO remover 150, but the present disclosure is not limited to such an example. The ammonia concentration in the hydrogen-containing gas discharged from reformer 100 may be directly measured. The nitrogen concentration in the hydrogen-containing gas discharged from reformer 100 may be measured. Moreover, for example, information which can be used for estimating the nitrogen concentration in the natural gas, such as information on the type of natural gas, position information, or information on the supply entity of the natural gas, may be obtained for the estimation.

## INDUSTRIAL APPLICABILITY

As described above, the hydrogen production device according to the present disclosure is capable of supplying hydrogen-containing gas having a sufficiently reduced ammonia concentration even without an ammonia remover. Accordingly, it is possible to reduce the cost and size of the hydrogen production device and the fuel cell system including the hydrogen production device. Hence, the hydrogen production device according to the present disclosure is suitable for a fuel cell system in which the hydrocarbon-based raw material contains nitrogen compounds, and which includes a CO remover that reduces the carbon monoxide concentration in the hydrogen-containing gas by an oxidation reaction.

## REFERENCE MARKS IN THE DRAWINGS

| | |
|---|---|
| 10 | heater |
| 20 | raw material supplier |
| 30 | water supplier |
| 31 | vaporizer |
| 40 | oxidizing gas supplier |
| 50 | reformer temperature detector |
| 60 | hydrogen-containing gas supply path |
| 61 | hydrogen-containing gas supply path |
| 70 | fuel gas supply path |
| 100 | reformer |
| 120 | converter |
| 125 | converter temperature detector |
| 130 | converter heater |
| 150 | CO remover |
| 200 | fuel cell |
| 300, 301 | controller |
| 310, 311 | information obtaining unit |
| 350 | hydrogen production device |
| 400 | fuel cell system |

## Claims

**1.** A hydrogen production device, comprising:

a reformer which produces hydrogen-containing gas from a hydrocarbon-based raw material by a reforming reaction;
a carbon monoxide (CO) remover which includes an oxidation catalyst, the CO remover reducing a carbon monoxide concentration in the hydrogen-containing gas with use of the oxidation catalyst by an oxidation reaction to decompose ammonia contained in the hydrogen-containing gas;
a raw material supplier which supplies the raw material to the reformer;
a water supplier which supplies, to the reformer, water to be used for the reforming reaction;
an oxidizing gas supplier which supplies oxidizing gas to the CO remover;
a heater which heats the reformer; and
a controller,
wherein the controller determines, based on a parameter, an upper limit value of a water vapor partial pressure in the hydrogen-containing gas supplied to the CO remover, and changes a set value of the water vapor partial pressure to a value lower than the upper limit value, the parameter being related to an ammonia concentration

in the hydrogen-containing gas supplied to the CO remover.

2. The hydrogen production device according to claim 1,
wherein, in order to change the set value, the controller performs at least one of:

a raw material increasing operation in which the raw material supplier is controlled such that an amount of raw material supplied from the raw material supplier is changed to a value higher than a first raw material supply amount which is an amount of raw material supplied at a time of operation when a nitrogen compound is not contained in the raw material;
a water amount reducing operation in which the water supplier is controlled such that an amount of water supplied from the water supplier is changed to a value lower than a first water supply amount which is an amount of water supplied at the time of operation when the nitrogen compound is not contained in the raw material; and
a heating operation in which the heater is controlled such that a temperature of the reformer is changed to a value higher than a first set temperature which is a temperature set at the time of operation when the nitrogen compound is not contained in the raw material.

3. The hydrogen production device according to any one of claims 1 and 2, further comprising:

a converter which reduces, by a water-gas shift reaction, a carbon monoxide concentration in the hydrogen-containing gas produced by the reformer; and
a converter heater which heats the converter,
wherein the controller controls the converter heater according to the parameter, such that a temperature at an outlet of the converter is changed to a value lower than a first converter temperature which is a temperature at a time of operation when a nitrogen compound is not contained in the raw material.

4. The hydrogen production device according to any one of claims 1 to 3, wherein the controller determines the parameter based on information on a nitrogen compound concentration in the raw material.

5. The hydrogen production device according to claim 4, further comprising:
an information obtaining unit which obtains the information.

6. The hydrogen production device according to claim 4 or claim 5,
wherein the information includes at least one of information on a nitrogen compound concentration, information on a kind of the raw material, position information, and information obtained from a supply entity of the raw material.

7. A fuel cell system, comprising:

the hydrogen production device according to any one of claims 1 to 6; and
a fuel cell which generates electric power by using the hydrogen-containing gas supplied from the hydrogen production device.

8. An operating method of a hydrogen production device which includes:
a reformer which produces hydrogen-containing gas from a hydrocarbon-based raw material by a reforming reaction; a carbon monoxide (CO) remover which includes an oxidation catalyst and reduces a carbon monoxide concentration in the hydrogen-containing gas with use of the oxidation catalyst by an oxidation reaction to decompose ammonia contained in the hydrogen-containing gas; a raw material supplier which supplies the raw material to the reformer; a water supplier which supplies, to the reformer, water to be used for the reforming reaction; an oxidizing gas supplier which supplies oxidizing gas to the CO remover; and a heater which heats the reformer, the operating method comprising:
determining, based on a parameter, an upper limit value of a water vapor partial pressure in the hydrogen-containing gas supplied to the CO remover, and changing a set value of the water vapor partial pressure to a value lower than the upper limit value, the parameter being related to an ammonia concentration in the hydrogen-containing gas supplied to the CO remover.

FIG. 1

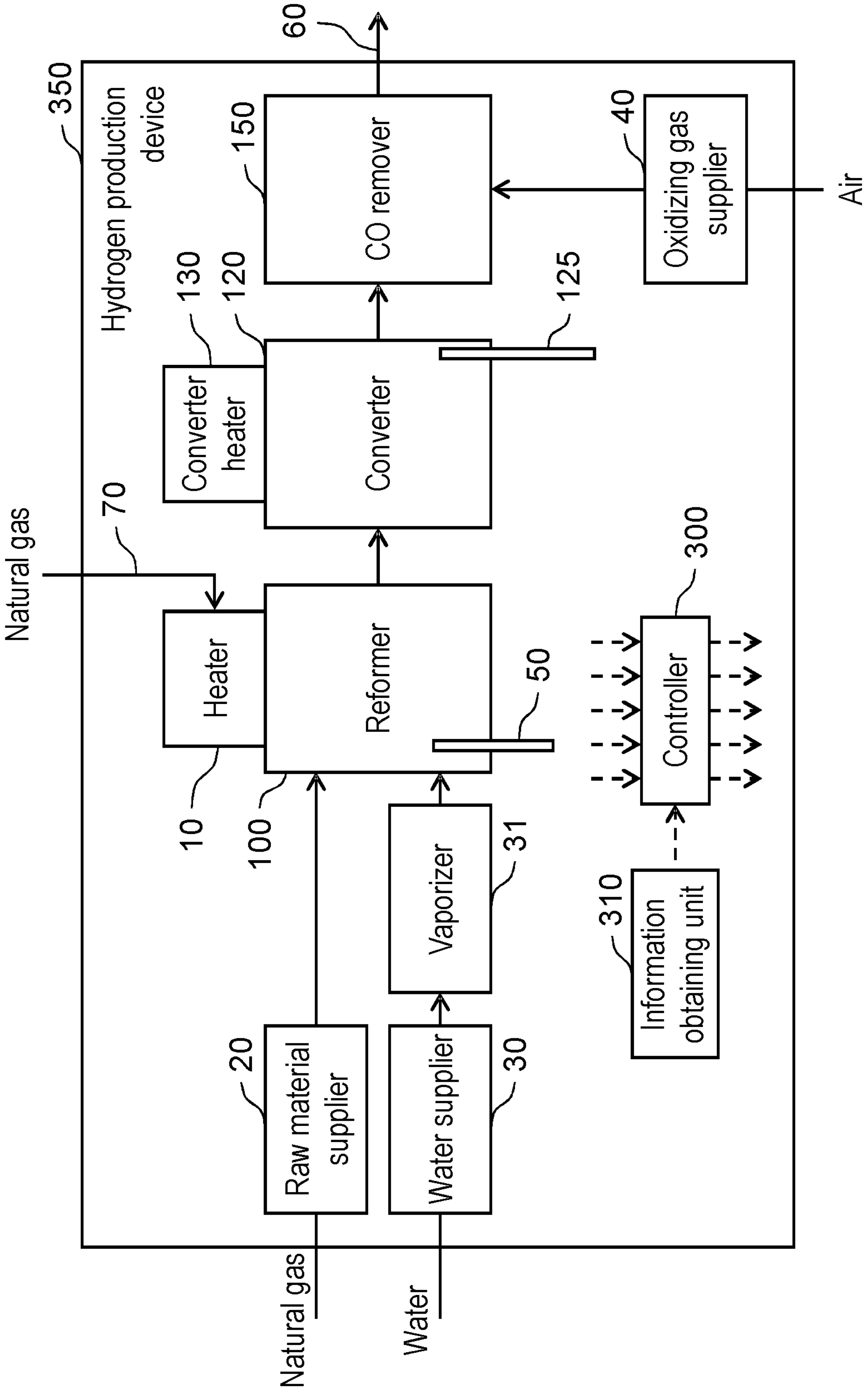
350
Hydrogen production device
60
150
CO remover
40
Oxidizing gas supplier
Air
130
120
Converter heater
Converter
125
Natural gas
70
Heater
Reformer
50
300
Controller
10
100
31
Vaporizer
310
Information obtaining unit
20
Raw material supplier
30
Water supplier
Natural gas
Water

FIG. 2

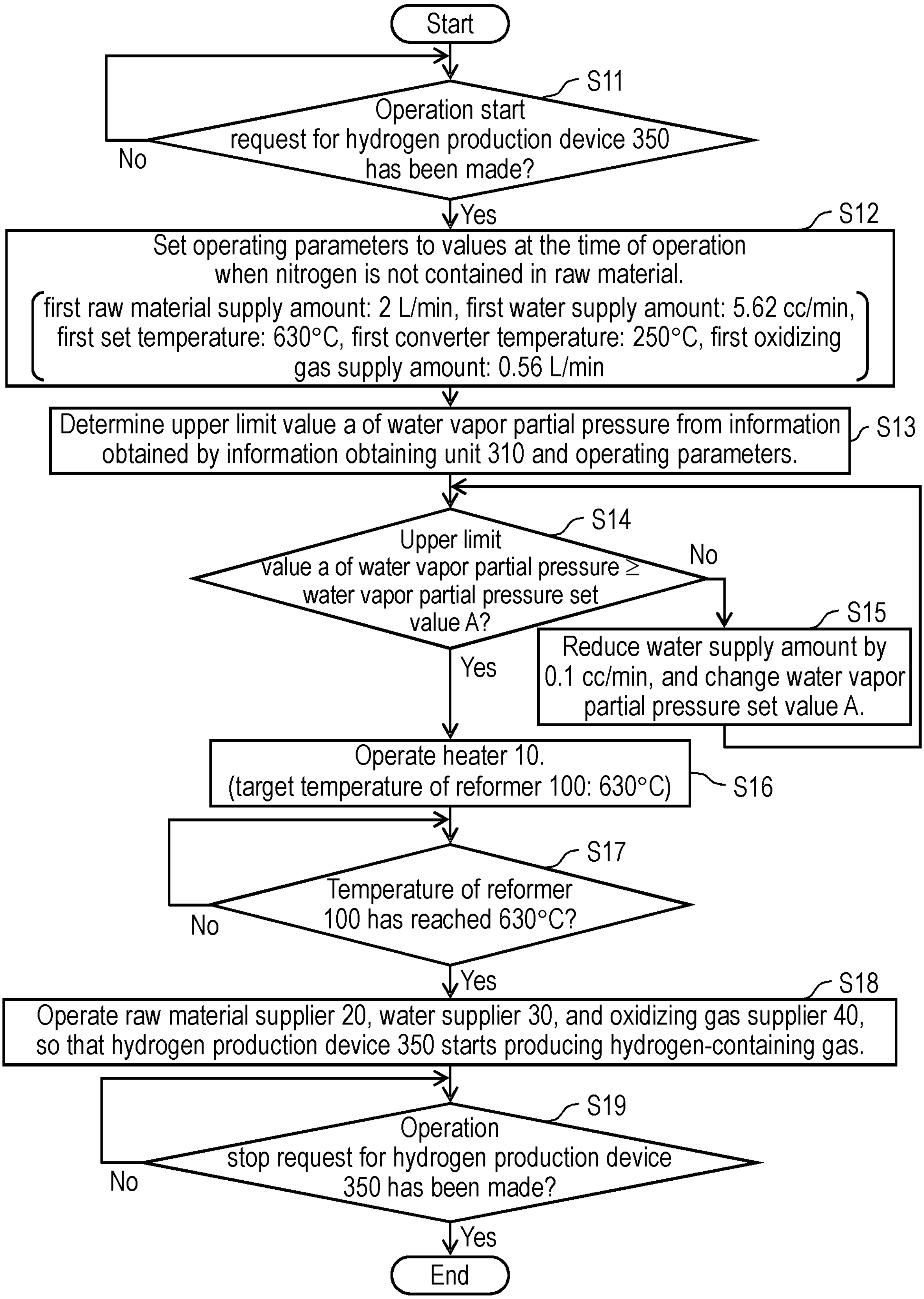
Start
S11
Operation start request for hydrogen production device 350 has been made?
No
Yes
S12
Set operating parameters to values at the time of operation when nitrogen is not contained in raw material.
(first raw material supply amount: 2 L/min, first water supply amount: 5.62 cc/min, first set temperature: 630°C, first converter temperature: 250°C, first oxidizing gas supply amount: 0.56 L/min)
Determine upper limit value a of water vapor partial pressure from information obtained by information obtaining unit 310 and operating parameters.
S13
S14
Upper limit value a of water vapor partial pressure ≥ water vapor partial pressure set value A?
No
S15
Reduce water supply amount by 0.1 cc/min, and change water vapor partial pressure set value A.
Yes
Operate heater 10.
(target temperature of reformer 100: 630°C)
S16
S17
Temperature of reformer 100 has reached 630°C?
No
Yes
S18
Operate raw material supplier 20, water supplier 30, and oxidizing gas supplier 40, so that hydrogen production device 350 starts producing hydrogen-containing gas.
S19
Operation stop request for hydrogen production device 350 has been made?
No
Yes
End

FIG. 3

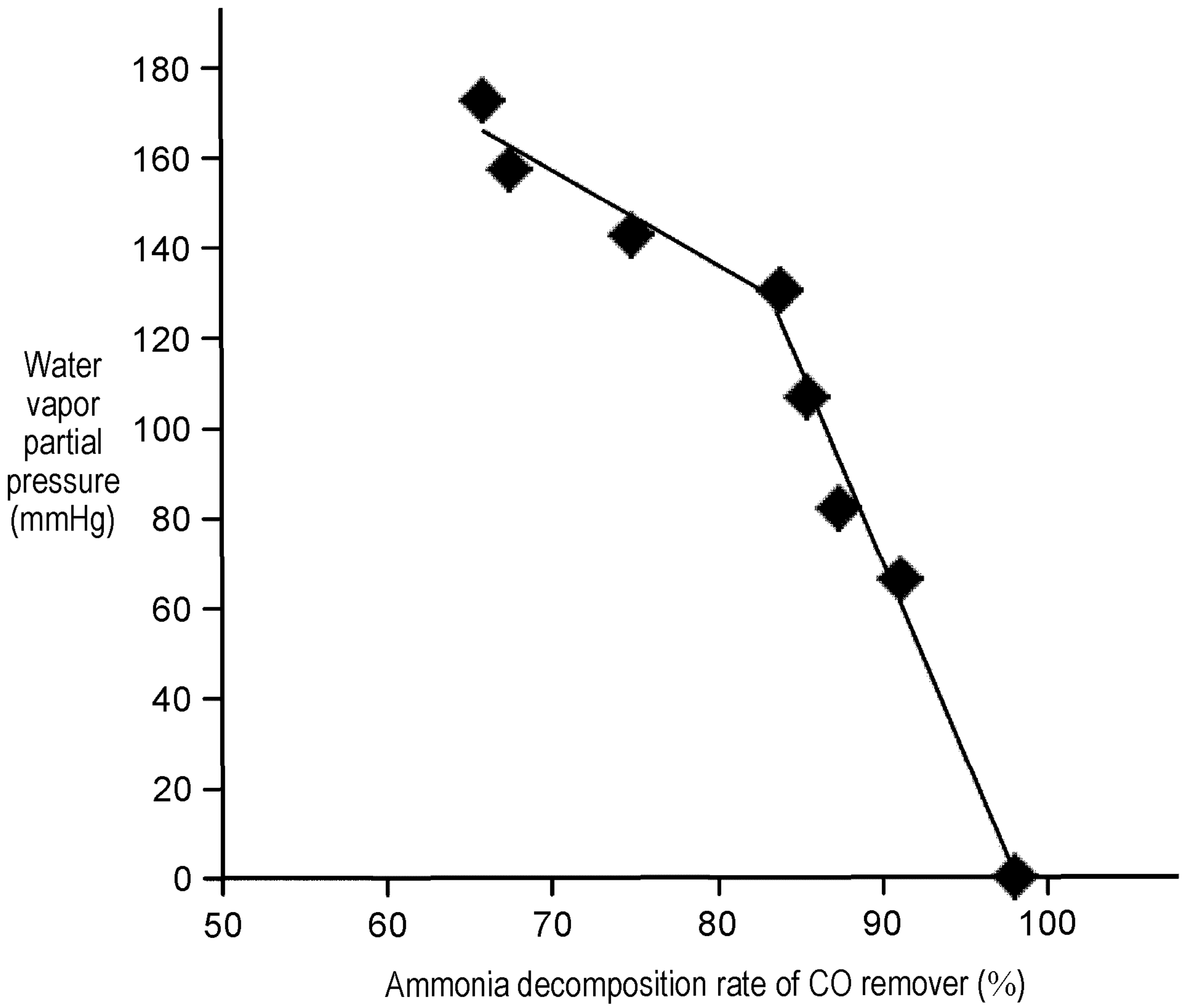
Water vapor partial pressure (mmHg)
180
160
140
120
100
80
60
40
20
0
50
60
70
80
90
100
Ammonia decomposition rate of CO remover (%)

FIG. 4

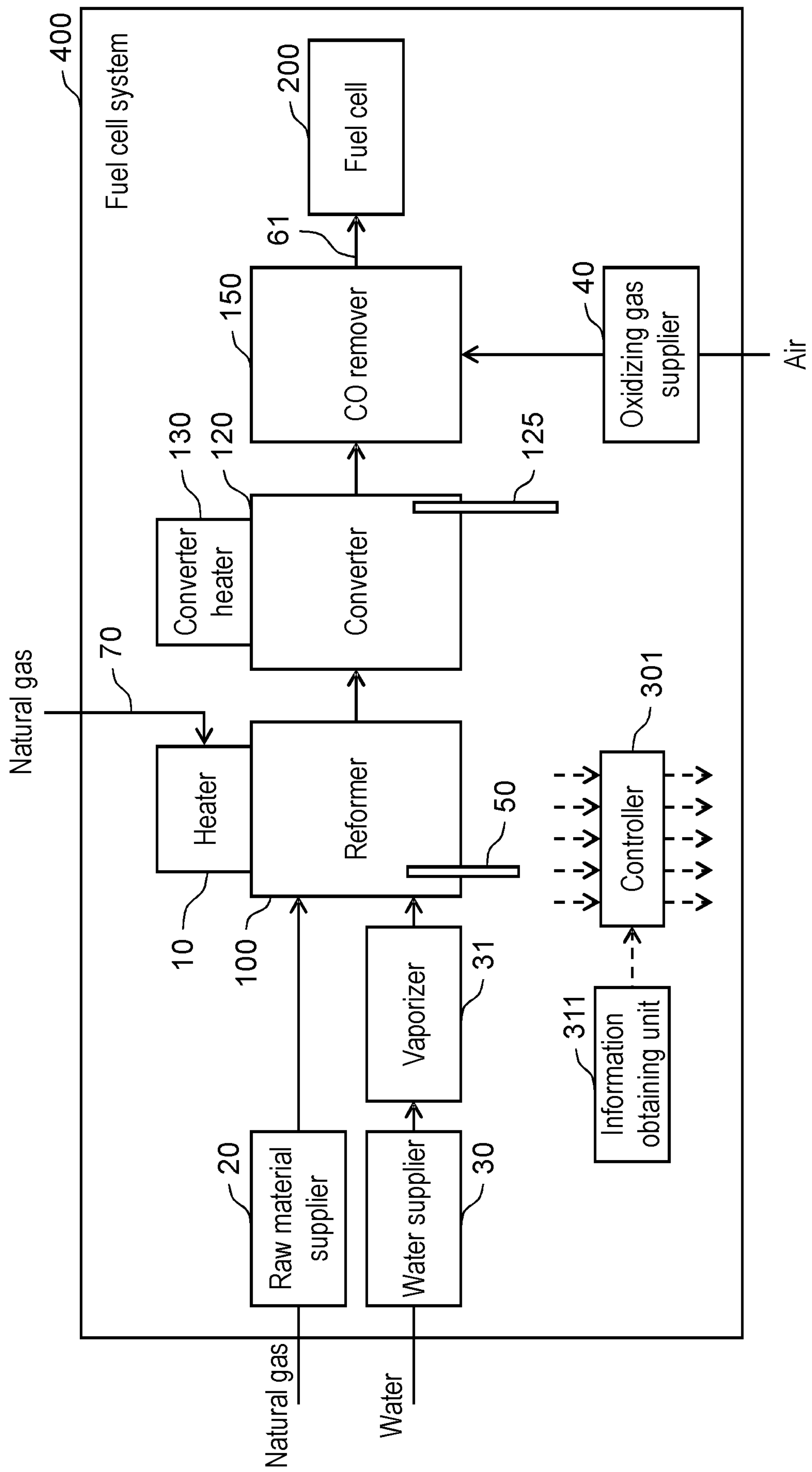
400
Fuel cell system
Natural gas
70
10
Heater
100
Reformer
50
Raw material supplier
20
Natural gas
Water supplier
30
Water
Vaporizer
31
Converter heater
130
120
Converter
125
CO remover
150
61
Fuel cell
200
Oxidizing gas supplier
40
Air
Controller
301
Information obtaining unit
311

FIG. 5

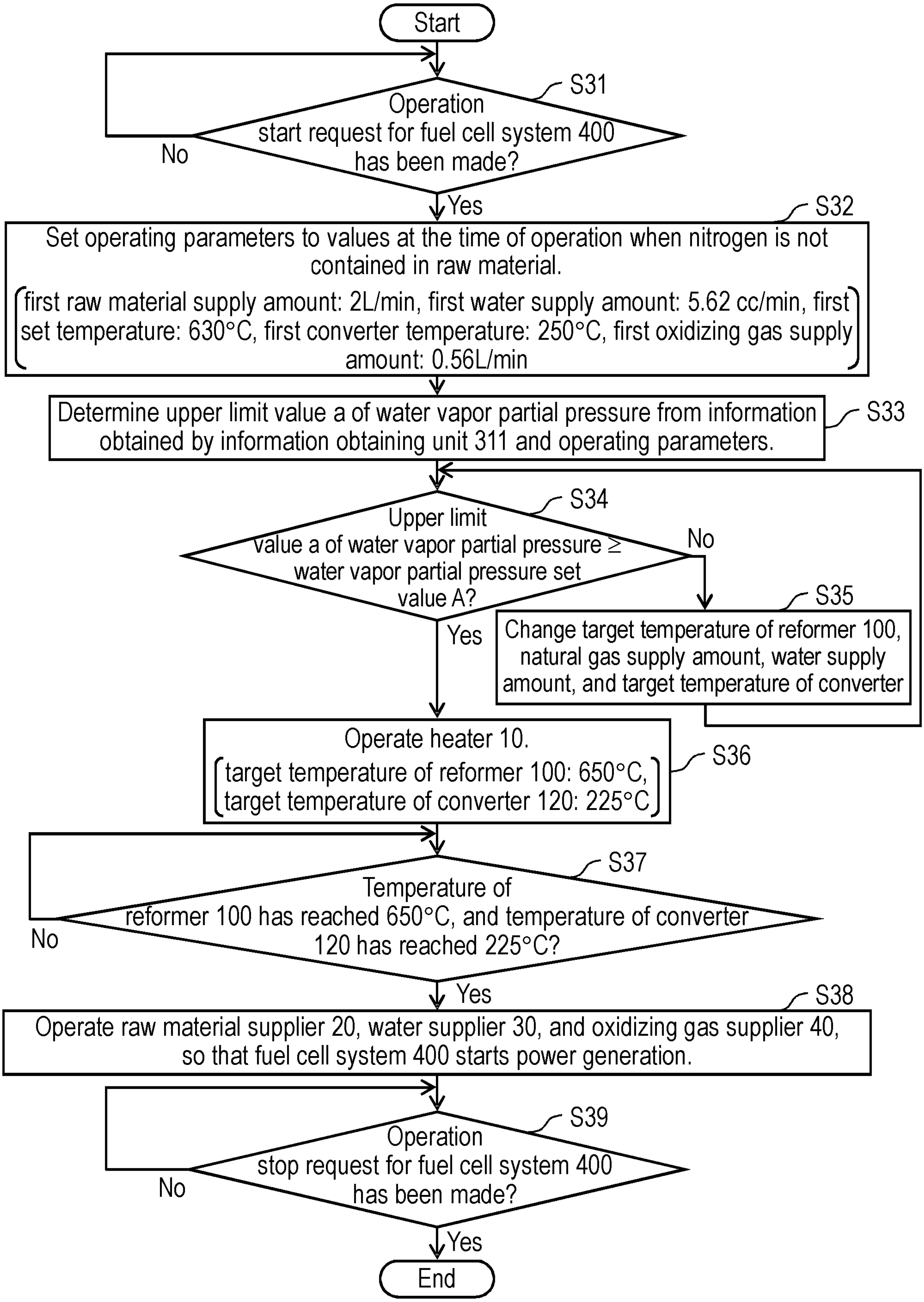
Start
S31
Operation start request for fuel cell system 400 has been made?
No
Yes
S32
Set operating parameters to values at the time of operation when nitrogen is not contained in raw material.
(first raw material supply amount: 2L/min, first water supply amount: 5.62 cc/min, first set temperature: 630°C, first converter temperature: 250°C, first oxidizing gas supply amount: 0.56L/min)
Determine upper limit value a of water vapor partial pressure from information obtained by information obtaining unit 311 and operating parameters.
S33
S34
Upper limit value a of water vapor partial pressure ≥ water vapor partial pressure set value A?
No
S35
Change target temperature of reformer 100, natural gas supply amount, water supply amount, and target temperature of converter
Yes
Operate heater 10.
(target temperature of reformer 100: 650°C, target temperature of converter 120: 225°C)
S36
S37
Temperature of reformer 100 has reached 650°C, and temperature of converter 120 has reached 225°C?
No
Yes
S38
Operate raw material supplier 20, water supplier 30, and oxidizing gas supplier 40, so that fuel cell system 400 starts power generation.
S39
Operation stop request for fuel cell system 400 has been made?
No
Yes
End

## INTERNATIONAL SEARCH REPORT

International application No.
PCT/JP2020/018491

A. CLASSIFICATION OF SUBJECT MATTER
C01B 3/38(2006.01)i; H01M 8/04313(2016.01)i; H01M 8/0444(2016.01)i; H01M 8/04701(2016.01)i; H01M 8/04746(2016.01)i; H01M 8/04828(2016.01)i; H01M 8/0612(2016.01)i; H01M 8/0662(2016.01)i; H01M 8/10(2016.01)i; B01J 23/46(2006.01)i; B01J 29/90(2006.01)i
FI: C01B3/38; B01J23/46 301M; B01J29/90 M; H01M8/0662; H01M8/0612; H01M8/0444; H01M8/04828; H01M8/04746; H01M8/04701; H01M8/04313; H01M8/10 101
According to International Patent Classification (IPC) or to both national classification and IPC

B. FIELDS SEARCHED
Minimum documentation searched (classification system followed by classification symbols)
C01B3/00-6/34; H01M8/04-8/0668; B01J21/00-38/74

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2007/081016 A1 (PANASONIC CORP.) 19.07.2007 (2007-07-19) entire text | 1-8 |
| A | JP 2017-105645 A (PANASONIC IP MANAGEMENT CO., LTD.) 15.06.2017 (2017-06-15) entire text | 1-8 |
| A | JP 2015-157732 A (PANASONIC IP MANAGEMENT CO., LTD.) 03.09.2015 (2015-09-03) entire text | 1-8 |
| A | JP 2017-19672 A (PANASONIC IP MANAGEMENT CO., LTD.) 26.01.2017 (2017-01-26) entire text | 1-8 |
| A | JP 2017-1903 A (PANASONIC IP MANAGEMENT CO., LTD.) 05.01.2017 (2017-01-05) entire text | 1-8 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 July 2020 (02.07.2020) | 14 July 2020 (14.07.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/018491

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-130193 A (PANASONIC IP MANAGEMENT CO., LTD.) 21.07.2016 (2016-07-21) entire text | 1-8 |

Form PCT/ISA/210 (continuation of second sheet) (January 2015)

**INTERNATIONAL SEARCH REPORT**
Information on patent family members

International application No.
PCT/JP2020/018491

| Patent Documents referred in the Report | Publication Date | Patent Family | Publication Date |
|---|---|---|---|
| WO 2007/081016 A1 | 19 Jul. 2007 | US 2010-0040915 A1<br>entire text<br>CN 101370733 A | |
| JP 2017-105645 A | 15 Jun. 2017 | (Family: none) | |
| JP 2015-157732 A | 03 Sep. 2015 | (Family: none) | |
| JP 2017-19672 A | 26 Jan. 2017 | (Family: none) | |
| JP 2017-1903 A | 05 Jan. 2017 | (Family: none) | |
| JP 2016-130193 A | 21 Jul. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046395 A